# EUROPÄISCHE PATENTSCHRIFT

(11) **EP 0 962 644 B1**
(45) Veröffentlichungstag und Bekanntmachung des Hinweises auf die Patenterteilung: **06.10.2004**
(21) Anmeldenummer: 99107220.8
(22) Anmeldetag: 14.04.1999
(51) Int. Cl.: F02F 3/00, F16J 1/22

(54) **Gebauter Kolben**
Multi-part piston
Piston en plusieurs éléments

(30) Priorität: 30.05.1998 DE 19824459
(43) Veröffentlichungstag der Anmeldung: 08.12.1999
(73) Patentinhaber: MAHLE GMBH, D-70376 Stuttgart (DE)
(72) Erfinder: Fuchs, Reinhold, 70736 Fellbach (DE); Jüngling, Kurt, 73760 Ostfildern (DE); Messmer, Dieter, 70378 Stuttgart (DE)

(56) Entgegenhaltungen:
- EP-A- 0 439 995
- CH-A- 223 608
- CH-A- 389 989
- CH-A- 390 618
- FR-A- 1 383 334
- US-A- 2 671 704
- US-A- 5 305 684

## Beschreibung

Die Erfindung betrifft einen gebauten Kolben nach dem Oberbegriff des Anspruches 1.

Ein derartiger Kolben ist aus der EP-OS 439 995 bekannt. Der dort beschriebene Kolben weist ein Unterteil auf, das aus Gusseisen besteht, und bei dem Kugelpfanne, Abstützung und Kolbenschaft einstückig sind. Derartige Bauteile haben den Nachteil, dass sie aufgrund unterschiedlicher Wandstärken gießtechnisch schwer beherrschbar sind und deshalb einen erhöhten Prüfaufwand erfordern.

Aus der US-PS 5,305,684 ist ein gebauter Kolben gemäß dem Oberbegriff des Anspruches 1 mit einem Abstützungsteil bekannt, das zur Aufnahme des Kugelkopfes eines Kugelpleuels eine kugelpfanne aufweist. Das Abstützungsteil ist aus Metall oder einem anderen federnd nachgiebigen Material wie bspw. Stahl gefertigt und weist eine Dicke von 4 mm auf. Damit der bekannte Kolben fehlerfrei arbeitet, ist wegen der geringen Dicke des Abstützungsteiles eine sehr präzise Fertigung und ein hoher Prüfaufwand erforderlich.

Die Erfindung beschäftigt sich deshalb mit dem Problem, einen gattungsgemäßen Kolben so auszulegen, dass ein erhöhter Prüfaufwand entfällt und Werkstofffehler weitestgehend ausgeschlossen werden.

Dieses Problem wird bei gattungsgemäßen Kolben gelöst durch die kennzeichnenden Merkmale des Anspruches 1. Vorteilhafte Weiterbildungen sind Gegenstand der Unteransprüche.

Da das Abstützungsteil nur eine Baulänge von maximal 60% des Durchmessers des Kolbens aufweist, ist es aus geschmiedetem Stahl gut herstellbar. Auch das Schaftteil, das weitgehend die Form eines Hohlzylinders mit Kreisringquerschnitt aufweist, ist relativ einfach herzustellen.

Die Erfindung wird im Folgenden anhand eines Ausführungsbeispieles näher erläutert.

Es zeigt:

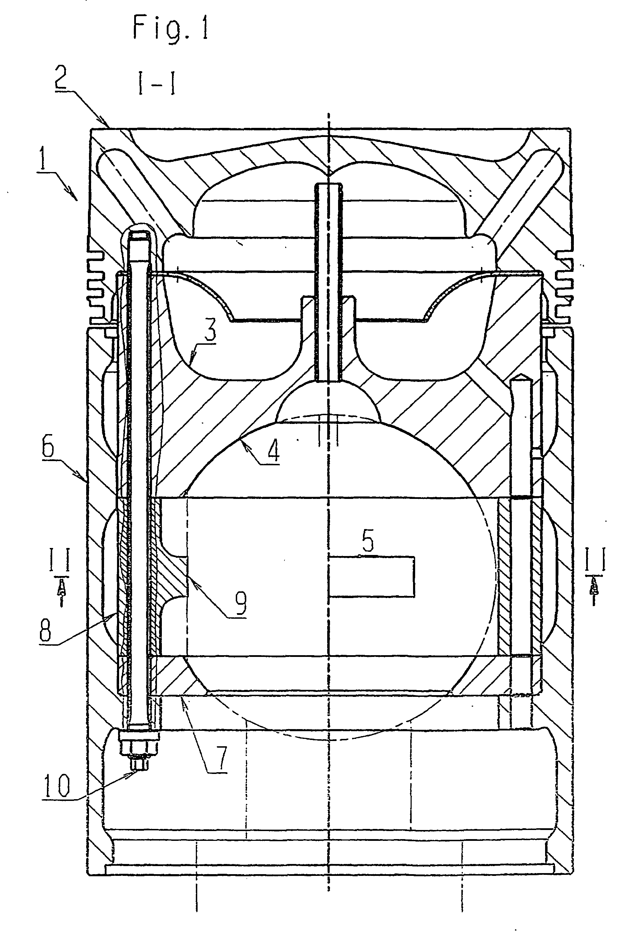

- Fig. 1: einen erfindungsgemäßen Kolben im Querschnitt

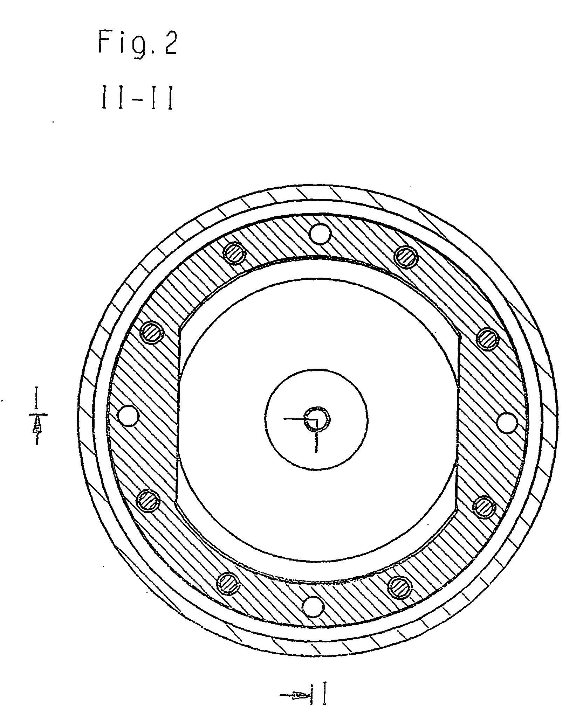

- Fig. 2: den erfindungsgemäßen Kolben nach Fig. 1, geschnitten gemäß II - II.

Ein gebauter Kolben 1 besteht aus einem Stahlboden 2, einem Abstützungsteil 3 mit einer Kugelpfanne 4 zur Aufnahme des Kugelkopfs 5 eines gestrichelt angedeuteten Kugelpleuels und einem Schaftteil 6. Das Abstützungsteil 3 besteht aus Schmiedestahl, weist eine axiale Länge von weniger als 60 % des Kolbendurchmessers auf und ist im Durchmesser ca. 10 % kleiner als der Kolbendurchmesser.

Das Schaftteil 6 ist weitgehend als Hohlzylinder mit kreisförmigem Querschnitt aufgebaut und kann aus Gußeisen, Stahl oder einer Aluminiumlegierung bestehen. Der Kugelkopf 5 ist von unten durch eine ringförmige, ein- oder mehrteilige Kugelschale 7 gefaßt. Zwischen der Kugelschale 7 und dem Abstützungsteil 3 ist ein Distanzstück 8 angeordnet. Das Distanzstück 8 kann jedoch auch einstückig mit der Kugelschale 7 ausgebildet sein. Der Kugelkopf 5 ist abgeflacht und am Distanzstück 8 ist gegenüberliegend eine nach innen weisende Fläche 9 vorgesehen, die an der Abflachung des Kugelkopfs 5 anliegt, um ein verdrehen des Kolbens auf dem Kugelkopfpleuel zu verhindern.

Dehnschrauben 10 verbinden das Schaftteil 6 mit Kugelschale 7, Distanzstück 8, Abstützungsteil 3 und Kolbenboden 2.

## Patentansprüche

1. Gebauter Kolben **(1)** mit einem Kolbenboden **(2)** aus Stahl,
- mit einem den Kolbenboden **(2)** tragenden Abstützungsteil **(3)** mit einer Kugelpfanne **(4)** zur Aufnahme des Kugelkopfs **(5)** eines Kugelpleuels,
- mit Verbindungsschrauben **(10)**, die eine ringförmige ein- oder mehrteilige Kugelschale **(7)** von unten gegen den Kugelkopf **(5)** ziehen und
- mit einem Kolbenschaft, der im Wesentlichen den Kolben im Zylinder führt, und der als gesondertes, nicht mit dem Abstützteil **(3)** einstückiges Schaftteil **(6)** ausgebildet ist,
**gekennzeichnet durch** die Merkmale,
- das die Kugelpfanne **(4)** beinhaltende Abstützungsteil **(3)** hat eine maximale Längenausdehnung in Axialrichtung des Kolbens von 60% des Kolbendurchmessers und besteht aus geschmiedetem Stahl,
- der maximale Durchmesser des Abstützungsteiles (3) ist mindestens 5% kleiner als der Durchmesser des Schaftteiles (6).

2. Gebauter Kolben nach Anspruch 1,
**dadurch gekennzeichnet,**
**daß** die Verbindungsschrauben (10) von der ringförmigen Kugelschale (7) bis zum Kolbenoberteil (2) durchgehend verlaufen.

3. Gebauter Kolben nach einem der vorhergehenden Ansprüche,
**dadurch gekennzeichnet,**
**daß** zwischen der ringförmigen Kugelschale (7) und dem Abstützungsteil (3) ein oder mehrere Distanzstücke (8) angeordnet sind.

## Claims

1. A multi-part piston (1) having a piston head (2) made of steel,
- having a support part (3), bearing the piston head (2), with a ball cup (4) for housing the spherical head (5) of a connecting rod,
- having connecting screws (10), which pull an annular, single-part or multi-part spherical shell (7) from below towards the spherical head (5) and
- having a piston body, which substantially guides the piston in the cylinder, and which is constructed as a separate body part (6) that is not in one piece with the support part (3),
**characterised by** the following features:
- the support part (3) containing the ball cup (4) has a maximum linear extension in the axial direction of the piston of 60 % of the piston diameter and is made from forged steel,
- the maximum diameter of the support part (3) is at least 5 % smaller than the diameter of the body part (6).

2. A multi-part piston according to Claim 1,
**characterised in that** the connecting screws (10) run continuously from the annular spherical shell (7) to the upper part (2) of the piston.

3. A multi-part piston according to one of the preceding Claims,
**characterised in that** one or more spacers (8) are disposed between the annular spherical shell (7) and the support part (3).

## Revendications

1. Piston (1) en plusieurs éléments comportant un fond de piston (2) en acier,
- comportant une pièce d'appui (3) portant le fond de piston (2) présentant un coussinet sphérique (4) pour recevoir la tête sphérique (5) d'une bielle sphérique,
- comportant des vis d'assemblage (10) qui serrent par dessous une coque sphérique (7) de forme annulaire en une ou plusieurs pièces contre la tête sphérique (5) et
- comportant une jupe de piston, qui guide substantiellement le piston dans le cylindre, et qui est réalisée comme pièce de jupe spéciale (6), ne formant pas un seul bloc avec la pièce d'appui (3),
**caractérisé par** les particularités suivantes,
- la pièce d'appui (3) contenant le coussinet sphérique (4) a une extension longitudinale maximale dans la direction axiale du piston de 60 % du diamètre du piston et est constituée d'acier forgé,
- le diamètre maximal de la pièce d'appui (3) est d'au moins 5 % inférieur au diamètre de la pièce de jupe (6).

2. Piston en plusieurs éléments selon la revendication 1,
**caractérisé en ce**
**que** les vis d'assemblage (10) s'étendent de part en part de la coque sphérique (7) jusqu'à la pièce supérieure du piston (2).

3. Piston en plusieurs éléments selon l'une des revendications précédentes,
**caractérisé en ce**
**qu'**entre la coque sphérique (7) de forme annulaire et la pièce d'appui (3) sont disposées une ou plusieurs pièces d'écartement (8).
